# EUROPEAN PATENT APPLICATION

(11) **EP 2 555 168 A2**
(43) Date of publication of application: **06.02.2013**
(21) Application number: 12380039.3
(22) Date of filing: 27.07.2012
(51) Int. Cl.: G07B 15/02

(54) **Electronic assembly for control and automated collection of parking fees in pre-established zones of the public highway**

(30) Priority: 04.08.2011 ES 201101253
(71) Applicant: Ajo Marti, Roberto, 40450 Nava de la Asuncion Segovia (ES)
(72) Inventor: Ajo Marti, Roberto, 40450 Nava de la Asuncion Segovia (ES)
(74) Representative: Sanchez del Campo Gonzalez de Ubierna, Ramon

(57) **Abstract**

AN ELECTRONIC ASSEMBLY FOR THE CONTROL AND AUTOMATED COLLECTION OF PARKING FEES IN PRE-ESTABLISHED ZONES OF THE PUBLIC HIGHWAY which comprises electronic controls (1) for transmitting a start signal AND a vehicle removal signal to a parking meter (7); parking meters (7), distributed in the different parking areas, with software and electronic systems for receiving the signal from the controls (1) and communicating with the personal electronic device (8) of the different attendants and with a remote data control centre (9); personal electronic devices (8) capable of receiving the data transmitted by the parking meters; and a remote data control centre (9) which manages all the parking meters and performs the automated collection by bank transfer from the accounts of the users and which controls the operation of the personal electronic devices (8) of all the attendants.

## Description

### OBJECT OF THE INVENTION

The invention, as the heading of this specification suggests, relates to an electronic assembly for the control and automated collection of parking fees in pre-established zones of the public highway.

More particularly the object of the invention focuses on an assembly of electronic devices capable of being interconnected and designed to facilitate control and automated collection of vehicle parking fees in zones of the public highway, which are known as the "blue zone" of payment, which avoids the use of coins inserted in parking meters and the placing of tickets on windscreens and facilitates the work of the attendant when checking vehicles which are correctly parked and those which are not.

### SCOPE OF THE INVENTION

The scope of the present invention lies within the sector of telecommunications and electronic devices, focussing on the field of those designed for the control and automated collection of parking fees.

### BACKGROUND OF THE INVENTION

It must be indicated at this point, as a reference to the state of the art, that the applicant has no knowledge of the existence of any other invention with a similar application which exhibits technical, structural and constituent characteristics similar to those exhibited by the application claimed here.

### EXPLANATION OF THE INVENTION

The electronic assembly for the control and automated collection of parking fees in pre-established zones of the public highway proposed in the present invention is therefore configured as an eminent novelty within its scope of application, the characterising details which suitably distinguish it being described in the final claims accompanying this specification of the same.

In concrete terms, what the invention proposes is an assembly of electronic devices comprising:

A plurality of electronic controls capable of transmitting a remote signal and provided with a digital screen as well as a programmable chip with which every user of the system who wishes to join it will be provided.

A plurality of parking meters similar to those that currently exist for receiving coins and dispensing tickets and arranged so that they are distributed a certain distance from each other in the different parking areas and equipped with an electronic system for receiving the signal transmitted by the uses, as well as with a remote communication system for connecting to a control centre and to a personal electronic device with which the different attendants in each parking area are provided.

A plurality of personal electronic devices (of the mini-computer type) for receiving the data transmitted by the parking meters, with the possibility of communication and the transmission and receiving of data to a control centre.

A control centre which manages the assembly of parking meters and performs the automated collection by means of a system selected by the user from his/her bank account and which also controls the operation of the personal electronic devices of the different attendants.

The operation of the system of automated parking provided by the electronic assembly for control and collection proposed by the present invention therefore consists of the following:

The user is provided with a control with which, after parking the vehicle, walks up to the parking meter and, instead of inserting coins and removing a ticket to place on the windscreen, presses a certain button on the said control to transmit a signal to the parking meter with a code identifying the said user which automatically links the user to a registration number and model of vehicle. A map of the parking zone, which will cover a certain number of streets, and on which the user accurately records the street and exact point of the said zone where he/she has parked his/her vehicle, as well as the time of arrival, also appears on the display or touch screen of the control.

These data, i.e. the registration number, the vehicle model and the place where it is parked, appear on the screen of the personal device of the attendant of the corresponding zone, these data having been transmitted to the same by the parking meter approached by the user and also indicating to the attendant the time of parking.

Thus although the attendant continues checking the parked vehicles, he/she will have the advantage that his/her personal electronic device will send him/her signals of the time the vehicles are parked as well as whether there is any excess time, in which case the corresponding penalty notice will be issued.

In parallel with this the user will also receive a notice on his control which may consist of an acoustic signal or a luminous LED, when the established time has elapsed.

When the user wishes to remove the vehicle he/she will again approach the parking meter with the control, and by pressing another button he will transmit a vehicle removal signal to the same, which will generate a notice which the attendant will receive on his personal electronic device, removing the said vehicle from his zone list. Logically the attendant can check in situ when he makes his inspection round whether the said user has actually removed his/her vehicle from the said parking space so that if this is not the case, he/she will issue the corresponding penalty notice.

Moreover, as soon as the user presses the button to remove the vehicle on his/her control, the parking meter transmits the signal to the control centre containing data for transmitting the collection to the bank account assigned to the code of the said user and which, advantageously, will be for the exact number of minutes recorded, because if coins are not used the fractions may be much more precise.

It should be mentioned that the control will be designed to be able to change the registration number and vehicle model assigned to a particular code, as well as the bank account assigned to the same to allow for case in which the user changes his/her vehicle or bank account.

In the light of the above it is determined that the electronic assembly described for control and automated collection of parking fees in pre-established zones of the public highway represents an innovation with hitherto unknown structural and constituent characteristics for this purpose, reasons which, combined with its practical usefulness, provide it with a sufficient basis for achieving the privilege of exclusivity required.

### DESCRIPTION OF THE DRAWINGS

To supplement the description given of the invention, and to assist in a better understanding of the characteristics which distinguish it, the present specification, as an integral part of the same, is accompanied by a set of drawings showing the following by way of non-exhaustive illustration:
Figure number 1. - Shows a schematic representation of each of the elements comprising the electronic assembly for the control and automated collection of parking fees in pre-established zones of the public highway constituting the object of the invention.

### PREFERRED EMBODIMENT OF THE INVENTION

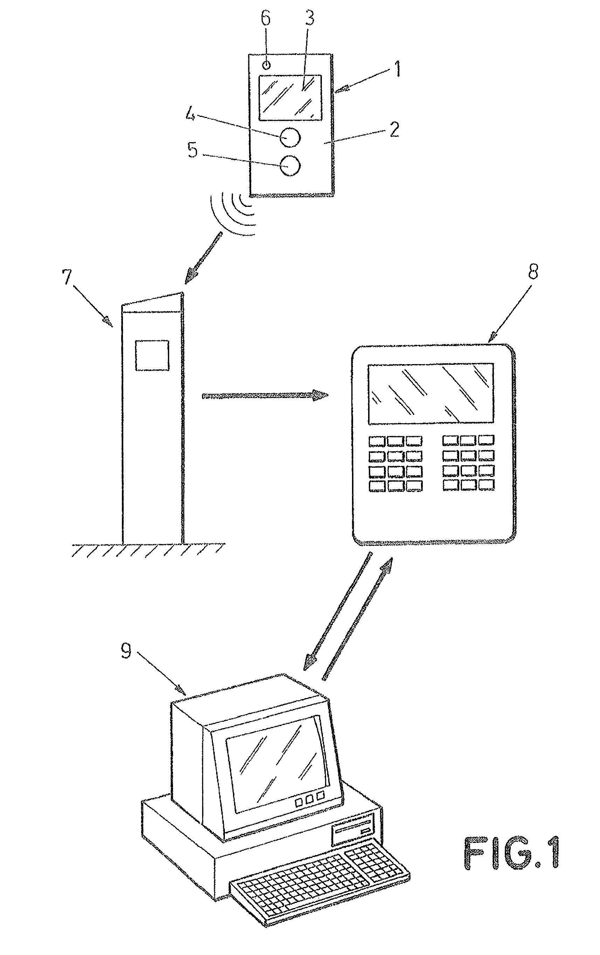

As shown in Figure 1 described, and according to the numbering adopted therein, it may seen how the electronic assembly for the control and automated collection of parking fees in pre-established zones of the public highway.

Electronic controls (1), comprising a small pocket device consisting of a casing (2) with a touch screen (3), on the inside of which it incorporates a signal transmitter and a programmable microchip for incorporating the data relating to the code and vehicle of each user, and provided with at least two buttons (4 and 5) for transmitting signals by radiofrequency, one for the signal for the start (4) of parking and the other for the signal for removal (5) of the vehicle. Moreover, the said controls (1) are optionally provided with a buzzer or acoustic signal transmitter and/or a luminous LED (6) to alert the user when the parking time limit has expired.

Parking meters (7), distributed a certain distance from each other in the different parking areas, which consist of a metal column fixed to the ground, suitably reinforced and protected with vandal-proof systems, and provided with the software and electronic systems required to receive the radiofrequency signal transmitted by the controls (1) of the users and transmit the corresponding data and communicate with a personal electronic device (8) with which the different attendants for each parking area are provided, as well as with a remote data control centre (9).

Personal electronic devices (8) comprising a small receiver with a screen capable of receiving the data transmitted by the parking meters which, optionally, will be provided with communication systems for transmitting and receiving data to and from the data control centre (9).

And a data control centre (9) which manages the assembly of parking meters and performs the automated collection by means of the system selected by the user from his/her bank account and which, moreover, controls the operation of the personal electronic devices (8) of all the attendants in the system.

Having described in sufficient detail the nature of the present invention, as well as the method of its implementation, it is not considered necessary to give a more extensive explanation to enable any person skilled in the art to understand its scope and the advantages that are derived from it, it being established that essentially the invention may be put into practice in other embodiments which differ in detail from that indicated by way of example, and which will also enjoy the protection now provided, provided that the fundamental principle of the invention is not altered, changed or modified.

## Claims

1. AN ELECTRONIC ASSEMBLY FOR THE CONTROL AND AUTOMATED COLLECTION OF PARKING FEES IN PRE-ESTABLISHED ZONES OF THE PUBLIC HIGHWAY, **characterised in that** it comprises electronic controls (1), for each user, provided with means for transmitting a radiofrequency signal to a parking meter, indicating the start of parking of the vehicle and a signal for indicating the removal of the same, to a parking meter (7); parking meters (7), distributed a certain distance from each other in the different parking areas, provided with software and electronic systems for receiving the signal transmitted by the controls (1) and in turn for transmitting data and communicating with a personal electronic device (8) with which attendants in each parking area are provided, as well as with a remote data control centre (9); personal electronic devices (8) capable of receiving the data transmitted by the parking meters; and a remote data control centre (9) which manages all the parking meters and performs the automated collection by means of the system selected by the user from his/her bank account, and which controls the operation of the personal electronic devices (8) of all the attendants.

2. THE ELECTRONIC ASSEMBLY FOR THE CONTROL AND AUTOMATED COLLECTION OF PARKING FEES IN PRE-ESTABLISHED ZONES OF THE PUBLIC HIGHWAY according to Claim 1, **characterised in that** each electronic control (1) comprises a pocket device consisting of a casing (2) with a touch screen (3) in whose interior it incorporates a signal transmitter and a programmable microchip for incorporating the data relating to the code and vehicle of each user, and provided with at least two buttons (4 and 5) for transmitting a signal, one for the start of parking (4) and the other a vehicle removal signal (5).

3. THE ELECTRONIC ASSEMBLY FOR THE CONTROL AND AUTOMATED COLLECTION OF PARKING FEES IN PRE-ESTABLISHED ZONES OF THE PUBLIC HIGHWAY according to Claim 2, **characterised in that** each electronic control (1) is provided with a buzzer or acoustic signal transmitter and/or a luminous LED (6) for alerting the user when the parking time limit has expired.

4. THE ELECTRONIC ASSEMBLY FOR THE CONTROL AND AUTOMATED COLLECTION OF PARKING FEES IN PRE-ESTABLISHED ZONES OF THE PUBLIC HIGHWAY according to Claim 1, **characterised in that** the parking meters (7) consist of a reinforced metal column fixed to the ground.

5. THE ELECTRONIC ASSEMBLY FOR THE CONTROL AND AUTOMATED COLLECTION OF PARKING FEES IN PRE-ESTABLISHED ZONES OF THE PUBLIC HIGHWAY according to Claim 1, **characterised in that** the personal electronic devices (8) of the attendants consist of a small receiver with screen.

6. THE ELECTRONIC ASSEMBLY FOR THE CONTROL AND AUTOMATED COLLECTION OF PARKING FEES IN PRE-ESTABLISHED ZONES OF THE PUBLIC HIGHWAY according to Claim 1, **characterised in that** the personal electronic devices (8) of the attendants are provided with communication systems for transmitting and receiving data to and from the data control centre (9) and the parking meter (8).
